# EUROPÄISCHE PATENTSCHRIFT

(11) **EP 1 554 154 B1**
(45) Veröffentlichungstag und Bekanntmachung des Hinweises auf die Patenterteilung: **08.03.2006**
(21) Anmeldenummer: 03750713.4
(22) Anmeldetag: 14.10.2003
(51) Int. Cl.: B60K 6/04, F02N 11/04

(54) **ANTRIEBSSTRANG FÜR EIN KRAFTFAHRZEUG SOWIE VERFAHREN ZUM STARTEN EINES VERBRENNUNGSMOTORS UND VERFAHREN ZUM GENERIEREN VON ELEKTRISCHEM STROM**
DRIVETRAIN FOR A MOTOR VEHICLE, METHOD FOR STARTING AN INTERNAL COMBUSTION ENGINE AND METHOD FOR GENERATING ELECTRICAL CURRENT
CHAINE CINEMATIQUE POUR UN VEHICULE AUTOMOBILE, PROCEDE DE DEMARRAGE D'UN MOTEUR A COMBUSTION INTERNE ET PROCEDE DE PRODUCTION DE COURANT ELECTRIQUE

(30) Priorität: 25.10.2002 DE 10250853
(43) Veröffentlichungstag der Anmeldung: 20.07.2005
(73) Patentinhaber: GETRAG Getriebe- und Zahnradfabrik Hermann Hagenmeyer GmbH & Cie KG, 74199 Untergruppenbach (DE)
(72) Erfinder: SEUFERT, Martin, 71711 Steinheim (DE); KIESSLING, Hannes, 71711 Steinheim (DE); SCHAARSCHMIDT, Reinhard, 75428 Illingen (DE)
(74) Vertreter: Steil, Christian
(86) Internationale Anmeldenummer: PCT/EP2003/011349
(87) Internationale Veröffentlichungsnummer: WO 2004/037593

(56) Entgegenhaltungen:
- EP-A- 0 916 546
- EP-A- 1 138 938
- DE-A- 10 203 514
- DE-A- 19 931 770
- US-B1- 6 302 227

## Beschreibung

Die vorliegende Erfindung betrifft einen Antriebsstrang für ein Kraftfahrzeug, das von einem Verbrennungsmotor angetrieben ist, mit:
- einer einzelnen Reibkupplung, die ein Eingangsglied und ein Ausgangsglied aufweist, wobei das Eingangsglied mit einer Kurbelwelle des Verbrennungsmotors zu verbinden ist;
- einem Stufengetriebe, das eine Eingangswelle, eine Mehrzahl von Radsätzen entsprechend einer Mehrzahl von Gangstufen und eine Abtriebswelle aufweist, wobei die Eingangswelle mit dem Ausgangsglied der Reibkupplung verbunden ist; und
- einer elektrischen Maschine, die über eine Kupplung mit der Abtriebswelle des Stufengetriebes verbindbar ist, um bei geöffneter oder geschlossener Reibkupplung Zugkraft auf die Abtriebswelle des Stufengetriebes leiten zu können, und die als Startergenerator mit der Kurbelwelle verbindbar ist, um den Verbrennungsmotor zu starten oder von dem Verbrennungsmotor angetrieben zu werden.

Die vorliegende Erfindung betrifft ferner ein Verfahren zum Starten eines Verbrennungsmotors eines Kraftfahrzeuges und zum Einleiten des Anfahrens des Kraftfahrzeuges.

Schließlich betrifft die vorliegende Erfindung ein Verfahren zum Generieren von elektrischem Strom durch eine elektrische Maschine, die von einem Verbrennungsmotor eines Kraftfahrzeuges angetrieben wird, während das Kraftfahrzeug stillsteht.

Es ist seit langem bekannt, in den Antriebsstrang eines verbrennungsmotor-getriebenen Kraftfahrzeuges eine elektrische Maschine zu integrieren. Dabei sind die Funktionen des Startens des Verbrennungsmotors und des Generierens von Strom für das Bordnetz herkömmlich durch zwei getrennte elektrische Maschinen realisiert, den Anlasser bzw. die Lichtmaschine.

Für Bordnetze des Kraftfahrzeuges mit höheren Nennspannungen (z. B. 42 Volt-Bordnetz) wird generell auch erwogen, zwischen Verbrennungsmotor und Reibkupplung eine elektrische Maschine als Startergenerator vorzusehen. Die elektrische Maschine kann bei geöffneter Reibkupplung als Motor zum Anlassen des Verbrennungsmotors betrieben werden. Bei laufendem Verbrennungsmotor kann die elektrische Maschine als Generator zum Speisen des Bordnetzes verwendet werden. Vergleiche Bosch Kraftfahrtechnisches Taschenbuch, 24. Auflage, Seite 932.

Eine elektrische Maschine im Antriebsstrang kann auch für andere Funktionen benutzt werden.

So ist es bekannt, die elektrische Maschine bei einem starken Beschleunigungswunsch des Fahrers als "Booster" einzusetzen, so daß sich die Leistung des Verbrennungsmotors und die Leistung der elektrischen Maschine am Abtrieb addieren.

Ferner ist es möglich, die beim Bremsen des Fahrzeugs und beim Abschalten des Motors verbleibende Schwungenergie in elektrische Energie umzusetzen (Rekuperation). Die derart gewonnene Energie läßt sich zur Anfahrunterstützung nutzen.

Ferner ist es bekannt, eine elektrische Maschine der Abtriebsseite des Getriebes zuzuordnen, um die elektrische Maschine bei Gangwechseln dazu zu nutzen, während der Phasen geöffneter Reibkupplung Zugkraft auf die Abtriebswelle des Getriebes zu geben. Hierdurch wird eine Zugkraftunterstützung realisiert, die insbesondere bei sogenannten automatisierten Handschaltgetrieben Anwendung findet.

Eine weitere Funktion einer elektrischen Maschine im Antriebsstrang ist die aktive Synchronisation. Hierbei ist die elektrische Maschine mit wenigstens einer Getriebewelle eines Stufengetriebes verbunden und dient dazu, die Welle zum Zwecke der Synchronisation an der Schaltkupplung eines einzulegenden Ganges abzubremsen bzw. zu beschleunigen. Bei dieser Ausführungsform kann zumindest für einige Schaltkupplungen auf eine mechanische Synchronisierung verzichtet werden, so daß die Schaltkupplungen als einfache Klauenkupplungen oder ähnliches ausgebildet werden können.

Schließlich ist es auch bekannt, daß das Abschalten des Verbrennungsmotors im Stillstand (beispielsweise bei einer Ampel) und das Wiederanlassen erst mit dem Anfahrwunsch erhebliche Brennstoffeinsparpotentiale in sich birgt.

Demzufolge ist es eine Wunschfunktion für integrierte elektrische Maschinen, einen solchen Direktstart nach dem Abschalten des Verbrennungsmotors zu unterstützen.

Die Druckschrift "Mögliche Anordnung des Startergenerators im Antriebsstrang" von Dr.-Ing. Wolfgang Reik, Tagungsband zur Fachtagung "E-Maschine im Antriebsstrang", 9. April 1999, offenbart eine Übersicht über die möglichen Anordnungen einer elektrischen Maschine im Antriebsstrang, und die mit der jeweiligen Anordnung verbundenen Vor- und Nachteile.

So hat beispielsweise eine Verbindung der elektrischen Maschine mit der Kurbelwelle des Verbrennungsmotors zwar den Vorteil, daß ein Direktstart möglich ist, eine Zugkraftunterstützung läßt sich jedoch nicht realisieren.

Eine Anordnung zwischen Reibkupplung und Getriebe hat zwar den Vorteil, daß eine Rekuperation möglich ist, ein Direktstart ist jedoch ebensowenig möglich wie eine Zugkraftunterstützung.

Eine im Getriebe angeordnete elektrische Maschine ermöglicht zwar sowohl eine Zugkraftunterstützung als auch eine Rekuperation, ermöglichst jedoch häufig keinen Betrieb der elektrischen Maschine als Startergenerator, da zum Antreiben des Verbrennungsmotors in der Regel nicht nur die Reibkupplung, sondern auch wenigstens eine der Schaltkupplungen des Stufengetriebes zu schließen ist.

Aus "Integration automatisierter Schaltgetriebe mit E-Maschine" von Dr. Robert Fischer et al, Tagungsband zur Fachtagung "E-Maschine im Antriebsstrang", 9. April 1999 ist bekannt, eine elektrische Maschine im Antriebsstrang so anzuordnen, daß sie einerseits über eine Kupplung mit der Abtriebswelle des Stufengetriebes verbindbar ist und andererseits über eine Kupplung mit der Getriebeeingangswelle (im folgenden "Fischer-Lösung"). Diese Anordnung wird als besonders günstig betrachtet, da sie sowohl einen Startergeneratorbetrieb, eine Rekuperation als auch eine Lastschaltung mit Zugkraftunterstützung ermöglichst.

Diese Variante des Standes der Technik wurde zur Bildung des Oberbegriffes des Anspruchs 1 herangezogen.

Ein Beispiel für einen Antriebsstrang, bei dem eine elektrische Maschine mit einer Welle des Stufengetriebes verbunden ist, ist aus der DE 199 31 770 A1 bekannt.

Anstelle einer Synchonisierungseinrichtung ist die Schaltkupplung für den dritten Gang als Reibschaltkupplung ausgebildet.

Aus der DE 199 60 621 A1 ist ein Hybridantrieb für Fahrzeuge bekannt, bei dem ein Schaltgetriebe in zwei Teilgetriebe unterteilt ist. Eines der Teilgetriebe ist mit einer elektrischen Maschine verbunden. Das andere Teilgetriebe ist mit einem Verbrennungsmotor und/oder mit der elektrischen Maschine wahlweise antriebsmäßig verbindbar. Die Abtriebswelle der elektrischen Maschine ist mit einer Welle des Stufengetriebes verbunden.

Die DE 295 02 906 U1 offenbart ebenfalls einen Hybridantrieb, wobei der Rotor einer elektrischen Maschine drehbar an der Kurbelwelle des Verbrennungsmotors gelagert ist. Mittels einer ersten Trennkupplung kann der Rotor mit der Kurbelwelle verbunden werden. Mittels einer zweiten Trennkupplung kann der Rotor mit einer Getriebeeingangswelle verbunden werden.

Schließlich ist aus der DE 101 33 695 A1 ein Doppelkupplungsgetriebe bekannt, das zwei Teilgetriebe aufweist. Wenigstens eines der Getriebe ist mit einer elektrischen Maschine verbindbar.

Vor dem obigen Hintergrund besteht das der vorliegenden Erfindung zugrunde liegende Problem darin, einen verbesserten Antriebsstrang für ein Kraftfahrzeug, ein verbessertes Startverfahren für einen Verbrennungsmotor sowie ein verbessertes Verfahren zum Generieren von elektrischem Strom anzugeben.

Diese Aufgabe wird bei dem eingangs genannten Antriebsstrang dadurch gelöst, daß die elektrische Maschine unter Umgehung der Reibkupplung drehfest mit der Kurbelwelle verbindbar ist, um somit bei geöffneter Reibkupplung den Verbrennungsmotor zu starten oder von dem Verbrennungsmotor angetrieben zu werden.

Ferner wird die obige Aufgabe gelöst durch ein Verfahren zum Starten eines Verbrennungsmotors eines Kraftfahrzeuges und zum Einleiten des Anfahrens des Kraftfahrzeuges, wobei die Kurbelwelle des Verbrennungsmotors mit einem Eingangsglied einer einzelnen Reibkupplung eines Antriebsstranges verbunden ist, deren Ausgangsglied mit einer Eingangswelle eines Stufengetriebes verbunden ist, und wobei der Antriebsstrang eine elektrische Maschine aufweist, die sowohl mit der Abtriebswelle des Stufengetriebes als auch unmittelbar mit der Kurbelwelle verbindbar ist, mit den auf ein Startaufforderungssignal hin erfolgenden Schritten:
a) Verbinden der elektrischen Maschine mit der Kurbelwelle, unter Umgehung der Reibkupplung;
b) Öffnen der Reibkupplung, falls diese noch nicht geöffnet ist;
c) Einlegen einer zum Anfahren geeigneten Gangstufe des Stufengetriebes, falls diese noch nicht eingelegt ist;
d) Anlauf der elektrischen Maschine, so daß der Verbrennungsmotor gestartet werden kann;
e) Starten des Verbrennungsmotors; und
f) Schließen der Reibkupplung zum Anfahren des Kraftfahrzeuges.

Dabei können die Schritte b) und c) jeweils vor oder nach dem Schritt a) erfolgen. Der Schritt d) kann gleichzeitig mit Schritt c) erfolgen.

Schließlich wird die obige Aufgabe gelöst durch ein Verfahren zum Generieren von elektrischem Strom durch eine elektrische Maschine, die von einem Verbrennungsmotor eines Kraftfahrzeuges angetrieben wird, während das Kraftfahrzeug stillsteht, wobei die Kurbelwelle des Verbrennungsmotors mit einem Eingangsglied einer einzelnen Reibkupplung eines Antriebsstranges verbunden ist, deren Ausgangsglied mit einer Eingangswelle eines Stufengetriebes verbunden ist, und wobei der Antriebsstrang eine elektrische Maschine aufweist, die sowohl mit der Abtriebswelle des Stufengetriebes als auch unmittelbar mit der Kurbelwelle verbindbar ist, mit den Schritten:
i) Öffnen der Reibkupplung, falls diese noch nicht geöffnet ist;
ii) Einlegen einer zum Anfahren geeigneten Gangstufe des Stufengetriebes, falls diese noch nicht eingelegt ist;
iii) Verbinden der elektrischen Maschine mit der Kurbelwelle, unter Umgehung der Reibkupplung, so daß die elektrische Maschine als Generator arbeitet.

Durch die Maßnahme, die elektrische Maschine unmittelbar mit der Kurbelwelle verbinden zu können, ermöglicht der erfindungsgemäße Antriebsstrang, den Verbrennungsmotor zu starten oder die elektrische Maschine im Generatorbetrieb zu betreiben, ohne daß die Reibkupplung geschlossen werden muß.

Somit sind bei dem erfindungsgemäßen Antriebsstrang nicht nur die Funktionen der elektrischen Maschine als Startergenerator und zur Zugkraftunterstützung möglich. Vielmehr ist es durch die direkte Verbindung mit der Kurbelwelle bei geöffneter Reibkupplung möglich, vor oder während des Startens des Verbrennungsmotors eine Gangstufe in dem Stufengetriebe zum Anfahren einzulegen. Mit dem Start des Verbrennungsmotors kann dann die Reibkupplung geschlossen werden, um unmittelbar einen Anfahrvorgang einzuleiten (sogenannter Direktstart).

Entsprechend ist es möglich, bei Stillstand des Fahrzeugs und laufendem Verbrennungsmotor die Reibkupplung bei eingelegtem Gang offenzuhalten, und dennoch die elektrische Maschine zum Zwecke des Speisens des Bordnetzes über die Kurbelwelle anzutreiben.

Desgleichen ist es über die unmittelbare Verbindbarkeit der elektrischen Maschine mit der Kurbelwelle möglich, bei geschlossener Reibkupplung Antriebsleistung in die Getriebeeingangswelle einzuleiten (z.B. als "Booster") oder im Schubbetrieb zusätzlich Schwungenergie in elektrische Energie umzusetzen (Rekuperation).

Es versteht sich, daß der erfindungsgemäße Antriebsstrang insbesondere ein automatisierter Antriebsstrang ist, bei dem die wesentlichen Funktionen des Stufengetriebes und der Reibkupplung durch Aktuatoren betätigt werden.

Ferner soll der Antriebsstrang insbesondere für solche Kraftfahrzeuge geeignet sein, bei denen der Verbrennungsmotor der Hauptmotor ist und die elektrische Maschine lediglich Zusatzfunktionen ausführt und keine gleichwertige Antriebsquelle darstellt.

Durch das erfindungsgemäße Verfahren zum Starten eines Verbrennungsmotors und zum Einleiten des Anfahrens des Kraftfahrzeuges wird gegenüber bekannten Verfahren erheblich Zeit gespart. Hierdurch wird der Komfort erhöht.

Bei solchen Antriebssträngen des Standes der Technik (Fischer-Lösung), bei denen der Elektromotor alternativ mit der Getriebeabtriebswelle oder der Getriebeeingangswelle verbindbar ist, läßt sich beispielsweise der Direktstart bzw. die Start-Stop-Funktion des Antriebsstranges nicht so komfortabel realisieren. Dort muß die elektrische Maschine bei geschlossener Reibkupplung den Verbrennungsmotor starten, wobei die Schaltkupplungen des Stufengetriebes geöffnet sein müssen. Anschließend muß die Reibkupplung wieder geöffnet werden und der Anfahrgang eingelegt werden, wobei hierzu die noch rotierende Antriebswelle des Getriebes bis zum Stillstand synchronisiert werden muß. Anschließend kann erst die Reibkupplung wieder geschlossen werden, um anzufahren. Am Berg besteht die Gefahr des Zurückrollens und damit die Notwendigkeit eines "Hill-Holders".

Gleichermaßen ist die Anordnung des Standes der Technik (Fischer-Lösung) nachteilig beim Generatorbetrieb im Fahrzeugstillstand. Falls die elektrische Maschine im Fahrzeugstillstand bei laufendem Verbrennungsmotor als Generator betrieben werden soll, muß zunächst der eingelegte Gang ausgelegt werden und die Reibkupplung geschlossen werden. Wenn anschließend angefahren werden soll, muß zunächst die Reibkupplung wieder geöffnet werden und der Anfahrgang eingelegt werden, wobei hierzu die noch rotierende Antriebswelle zum Stillstand verzögert (synchronisiert) werden muß. Erst dann kann die Reibkupplung erneut zum Zwecke des Anfahrens geschlossen werden.

Mittels der erfindungsgemäßen Verfahren lassen sich diese Nachteile vermeiden. Der Anfahrvorgang kann in beiden Betriebsarten schneller erfolgen, was zur Akzeptanz des gesamten Systems beiträgt. Insbesondere wird der Fahrer keinen Unterschied zu einem normalen Fahrzeug spüren. Im Falle des Generatorbetriebs bei stillstehendem Fahrzeug ist es sogar möglich, eine Kriechfunktion (Berg-Halte-Funktion) über die Reibkupplung vorzusehen, als eine Art "Anfahrassistent".

Gemäß einer bevorzugten Ausführungsform des erfindungsgemäßen Antriebsstranges ist die elektrische Maschine außerhalb eines Gehäuses des Stufengetriebes angeordnet und weist eine Abtriebswelle auf, die sich über einen Wellendichtung in das Innere des Gehäuses hinein erstreckt.

Bei dieser Ausführungsform ist es nicht notwendig, die elektrische Maschine besonders abzudichten, da sie außerhalb des Getriebegehäuses angeordnet ist. Die Verbindung der Abtriebswelle der elektrischen Maschine mit der Abtriebswelle des Stufengetriebes bzw. der Kurbelwelle kann dann innerhalb des Getriebegehäuses erfolgen. Hierzu lassen sich dann beispielsweise herkömmliche Schaltkupplungen verwenden.

Dabei ist es besonders bevorzugt, wenn die Abtriebswelle der elektrischen Maschine parallel zu der Abtriebswelle des Stufengetriebes angeordnet ist.

Hierbei läßt sich der für den Antriebsstrang im Fahrzeug zur Verfügung stehende Bauraum besonders günstig ausnutzen.

Ferner ist es bei dieser Ausführungsform bevorzugt, wenn die Abtriebswelle der elektrischen Maschine über einen Radsatz und eine Schaltkupplung mit der Abtriebswelle des Stufengetriebes verbindbar ist.

Die Technologie der Anbindung der elektrischen Maschine an die Abtriebswelle des Stufengetriebes kann demzufolge mittels standardisierter und damit kostengünstig herstellbarer Elemente im Inneren des Stufengetriebes erfolgen.

Von besonderem Vorzug ist es dabei, wenn die Schaltkupplung eine synchronisierte Schaltkupplung ist.

Auf diese Weise läßt sich die elektrische Maschine auch bei Differenzdrehzahlen zu der Abtriebswelle des Stufengetriebes weitgehend ruckfrei anbinden.

Gemäß einer weiteren bevorzugten Ausführungsform ist die Abtriebswelle der elektrischen Maschine parallel zu der Kurbelwelle des Verbrennungsmotors angeordnet.

Durch diese Anordnung läßt sich konstruktiv günstig realisieren, daß die elektrische Maschine sowohl mit der Abtriebswelle des Stufengetriebes als auch mit der Kurbelwelle zu verbinden ist.

Ferner ist es von Vorteil, wenn die Abtriebswelle der elektrischen Maschine über eine Schaltkupplung mit der Kurbelwelle verbindbar ist und wenn die Schaltkupplung innerhalb des Gehäuses des Stufengetriebes angeordnet ist.

Auch bei dieser Ausführungsform ist es besonders günstig, daß zur schaltbaren Verbindung mit der Kurbelwelle eine standardisierte und wartungsfreie Schaltkupplung im Inneren des Getriebegehäuses angeordnet werden kann. Mit anderen Worten ist es nicht notwendig, außerhalb des Getriebes Schaltmittel vorzusehen, die einer besonderen Wartung oder Kapselung bedürfen.

Auch wird es als vorteilhaft angesehen, wenn die Verbindung zwischen der Abtriebswelle der elektrischen Maschine und der Kurbelwelle über eine Welle erfolgt, die parallel zu der Eingangswelle des Stufengetriebes angeordnet ist.

Bei dieser Ausführungsform ist es möglich, die separate Welle konstruktiv günstig anzuordnen, so daß auch ein größerer Freiraum hinsichtlich der Anordnung des Elektromotors gegeben ist, insbesondere außen an dem Getriebegehäuse.

Es versteht sich dabei, daß die separate Welle bei Anordnung der Schaltkupplung im Inneren des Getriebegehäuses über eine Wellendichtung aus dem Getriebegehäuse heraustritt, um eine Verbindung mit der Kurbelwelle zu realisieren.

Gemäß einer alternativen bevorzugten Ausführungsform erfolgt die Verbindung zwischen der Abtriebswelle der elektrischen Maschine und der Kurbelwelle über ein Drehglied, das konzentrisch zu der Eingangswelle des Stufengetriebes angeordnet ist.

Hierbei ist es besonders günstig, daß in dem begrenzten Bauraum zwischen Stufengetriebe und Kurbelwelle keine getriebeaußenseitige Welle vorzusehen ist und insofern der Bauraum in radialer Richtung sich nicht wesentlich vergrößert.

Dabei ist es besonders bevorzugt, wenn das Drehglied als Hohlwelle ausgebildet ist, die mit dem Eingangsglied der Reibkupplung verbunden ist und um die Eingangswelle des Stufengetriebes herum angeordnet ist.

Bei dieser Ausführungsform läßt sich die Anbindung des Drehgliedes an die Abtriebswelle der elektrischen Maschine im Inneren des Gehäuses des Stufengetriebes besonders günstig realisieren. Insbesondere ergibt sich eine kurze axiale Baulänge des Gehäuses des Stufengetriebes.

Alternativ ist es von Vorteil, wenn die Eingangswelle des Stufengetriebes als Hohlwelle ausgebildet ist und wenn das Drehglied als Welle innerhalb der Eingangswelle gelagert ist.

Bei dieser Ausführungsform läßt sich das Drehglied konstruktiv besonders einfach mit dem Eingangsglied der Reibkupplung verbinden.

Gemäß einer weiteren alternativen bevorzugten Ausführungsform ist das Drehglied als Ringrad ausgebildet, das mittels einer Wellendichtung gegenüber dem Gehäuse des Stufengetriebes abgedichtet und über wenigstens einen mit dem Eingangsglied der Reibkupplung verbundenen Mitnehmer drehfest mit der Kurbelwelle verbunden ist.

Dabei ist von Vorteil, daß die Reibkupplung bzw. deren Aktuatorik weitgehend unverändert bleiben kann, bis auf den erwähnten Mitnehmer.

Dabei ist es von besonderem Vorteil, wenn die Verbindung zwischen der Abtriebswelle der elektrischen Maschine und dem Ringrad über wenigstens ein Zugmittelgetriebe erfolgt.

Das Zugmittelgetriebe kann bspw. ein Riemenantrieb oder ein Kettenantrieb sein. Durch diese Maßnahme kann gegenüber Zahnradverbindungen Gewicht eingespart werden. Ferner kann hierdurch die radiale Baugröße des Getriebes begrenzt werden.

Durch die konzentrische Anordnung des Ringrades in Bezug auf die Eingangswelle des Stufengetriebes ist dabei eine günstige Ausnutzung des vorhandenen Bauraumes möglich.

Insgesamt ist es ferner von Vorteil, wenn die Abtriebswelle der elektrischen Maschine mittels eines Schaltkupplungspaketes alternativ mit der Kurbelwelle oder der Abtriebswelle des Stufengetriebes verbindbar ist.

Auf diese Weise läßt sich die elektrische Maschine mittels einer kompakten Anordnung vom Startergeneratorbetrieb in den Betrieb zur Kraftunterstützung umschalten.

Dabei ist es von besonderem Vorteil, wenn das Schaltkupplungspaket zusätzlich in den Leerlauf schaltbar ist, so daß die Abtriebswelle der elektrischen Maschine leerläuft.

Hierdurch ist es beispielsweise möglich, die elektrische Maschine unabhängig von dem Betriebszustand des Stufengetriebes als Motor für Nebenaggregate zu betreiben.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: das schematische Layout einer ersten Ausführungsform des erfindungsgemäßen Antriebsstranges;
- Fig. 2: das schematische Layout einer zweiten Ausführungsform des erfindungsgemäßen Antriebsstranges;
- Fig. 3: eine Abwandlung der zweiten Ausführungsform des erfindungsgemäßen Antriebsstranges;
- Fig. 4: das schematische Layout einer dritten Ausführungsform des erfindungsgemäßen Antriebsstranges;
- Fig. 5: das schematische Layout einer vierten Ausführungsform des erfindungsgemäßen Antriebsstranges;
- Fig. 6: das schematische Layout einer fünften Ausführungsform des erfindungsgemäßen Antriebsstranges;
- Fig. 7: das schematische Layout einer sechsten Ausführungsform des erfindungsgemäßen Antriebsstranges ; und
- Fig. 8: das schematische Layout einer siebten Ausführungsform des erfindungsgemäßen Antriebsstranges.

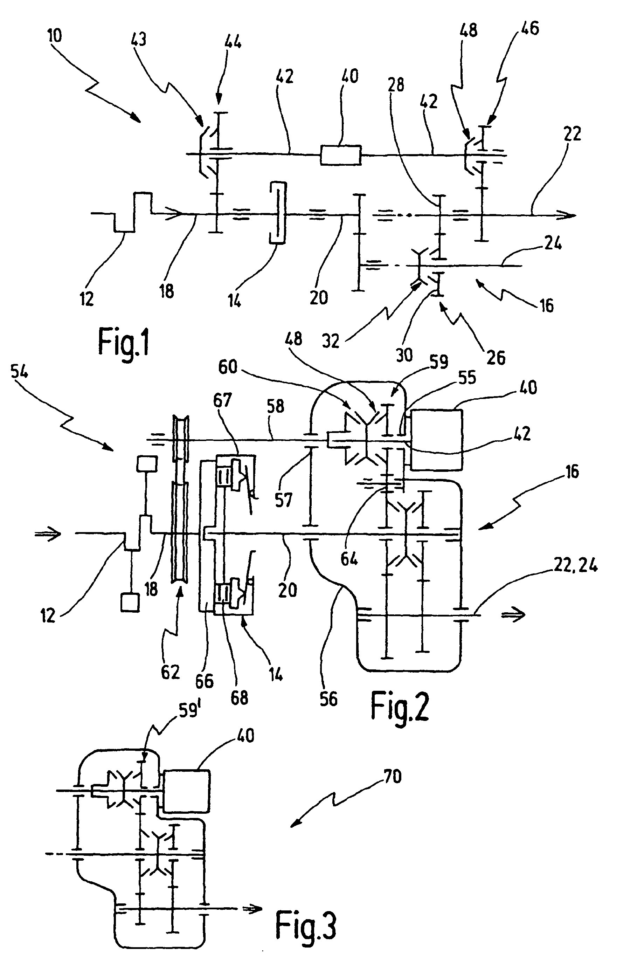

In Fig. 1 ist eine erste Ausführungsform eines erfindungsgemäßen Antriebsstranges generell mit 10 bezeichnet.

Der Antriebsstrang 10 ist in einem nicht näher dargestellten Kraftfahrzeug montierbar, das von einem Verbrennungsmotor 12 angetrieben ist.

Der Antriebsstrang 10 weist eine Reibkupplung 14 und ein Stufengetriebe 16 auf.

Die Reibkupplung 14 ist als Anfahr- und Trennkupplung ausgebildet und üblicherweise als Trockenkupplung realisiert. Sie kann jedoch auch als Naßkupplung ausgebildet sein.

Ein Eingangsglied der Reibkupplung 14 ist mit einer Kurbelwelle 18 des Verbrennungsmotors 12 verbunden. Ein Ausgangsglied der Reibkupplung 14 ist mit einer Eingangswelle 20 des Stufengetriebes 16 verbunden.

Eine Abtriebswelle 22 des Stufengetriebes 16 ist über ein nicht dargestelltes Differential mit Antriebsrädern des Kraftfahrzeuges verbunden.

Das Stufengetriebe 16 ist als Stirnradgetriebe ausgebildet, mit einer Vorgelegewelle 24, die in an sich herkömmlicher Bauweise parallel zu der Abtriebswelle 22 angeordnet ist.

Das Stufengetriebe 16 weist ferner eine Mehrzahl von Radsätzen entsprechend einer Mehrzahl von Gangstufen auf, von denen in Fig. 1 aus Gründen einer übersichtlichen Darstellung nur ein Radsatz 26 gezeigt ist.

Der Radsatz 26 weist ein Festrad 28 auf, das drehfest mit der Abtriebswelle 22 verbunden ist, und ein Losrad 30, das drehbar an der Vorgelegewelle 24 gelagert ist.

Eine schematisch gezeigte Schaltkupplung 32 dient zum wahlweisen Verbinden des Losrades 30 mit der Vorgelegewelle 24. Die Schaltkupplung 32 kann als Synchronkupplung ausgebildet sein. Es kann sich jedoch auch um eine nicht synchronisierte Klauenkupplung oder ähnliches handeln.

Ferner weist der Antriebsstrang 10 eine elektrische Maschine 40 auf.

Eine Abtriebswelle 42 der elektrischen Maschine 40 ist über einen schaltbaren Radsatz 44 mit der Kurbelwelle 18 des Verbrennungsmotors 12 verbunden. Zum Verbinden bzw. Lösen der Kurbelwelle 18 dient eine Schaltkupplung 43, die beispielsweise an der Abtriebswelle 42 angeordnet sein kann.

Ferner ist die Abtriebswelle 42 der elektrischen Maschine 40 über einen schaltbaren Radsatz 46 mit der Abtriebswelle 22 des Stufengetriebes 16 verbunden. Zu diesem Zweck ist an der Abtriebswelle 42 eine Schaltkupplung 48 vorgesehen, die dazu ausgelegt ist, den Radsatz 46 formschlüssig mit der Abtriebswelle 42 der elektrischen Maschine 40 zu verbinden.

Die elektrische Maschine 40 kann über die Verbindung zur Kurbelwelle 18 als Startergenerator betrieben werden. Zum Starten des Verbrennungsmotors 12 wird die Schaltkupplung 43 geschlossen und die Schaltkupplung 48 geöffnet und die Reibkupplung 14 wird ebenfalls geöffnet. Anschließend wird die elektrische Maschine als Motor betrieben, um den Verbrennungsmotor 12 anzutreiben und zu starten.

Bei laufendem Verbrennungsmotor 12 wird die elektrische Maschine 40 als Generator betrieben und dient dazu, das Bordnetz des Kraftfahrzeuges mit Spannung zu versorgen bzw. eine nicht näher dargestellte Batterie des Kraftfahrzeuges aufzuladen.

Bei Gangwechseln kann die elektrische Maschine 40 zur Zugkraftunterstützung verwendet werden. In diesem Fall wird die Schaltkupplung 43 gelöst und die Schaltkupplung 48 geschlossen. Während die Reibkupplung 14 zum Auslegen des Quellganges und Einlegen des Zielganges geöffnet ist, kann die elektrische Maschine 40 als Motor betrieben werden, um so Zugkraft auf die Abtriebswelle 22 des Stufengetriebes 16 zu leiten.

Ferner kann die elektrische Maschine 40 bei eingelegtem Gang und geschlossener Reibkupplung 14 als "Booster" verwendet werden, um die Abtriebsleistung an der Getriebeabtriebswelle 22 zu steigern. Der Boosterbetrieb kann bei geschlossener Kupplung 48 oder auch bei geschlossener Kupplung 43 erfolgen. In letzterem Fall erfolgt dann Momentenfluß über den jeweils geschalteten Gang. Dies ist insbesondere in den unteren Gängen möglicherweise von Vorteil.

Aufgrund der unmittelbaren Verbindbarkeit der Abtriebswelle 42 der elektrischen Maschine 40 mit der Kurbelwelle 18 ist es möglich, den Verbrennungsmotor 12 bei geöffneter Reibkupplung 14 zu starten. Es versteht sich, daß in diesem Fall auch die Schaltkupplung 48 geöffnet werden muß.

Dies bedeutet, daß in dem Stufengetriebe 16 bereits ein Gang für den Anfahrvorgang eingelegt werden kann. Nach dem Start des Verbrennungsmotors 12 kann dann die Reibkupplung 14 unmittelbar geschlossen werden, um den Anfahrvorgang einzuleiten. Gegebenenfalls kann der Vorgang des Startens des Verbrennungsmotors 12 und des Schließens der Reibkupplung 14 auch überschneidend durchgeführt werden.

Ferner kann die elektrische Maschine 40 im Schubbetrieb des Verbrennungsmotors 12 zur Energierückgewinnung (Rekuperation) verwendet werden, wozu die Schaltkupplung 43 geöffnet und die Schaltkupplung 48 geschlossen wird.

Auch ist es möglich, die elektrische Maschine 40 bei laufendem Verbrennungsmotor 12 im Stillstand als Generator zu betreiben. In diesem Fall wird die Trennkupplung 43 geschlossen und die Trennkupplung 48 geöffnet.

Ferner ist es möglich, die elektrische Maschine 40 als Rangierhilfe oder Anfahrhilfe zu verwenden. In diesem Fall werden die Reibkupplung 14 und die Schaltkupplung 43 geöffnet und die Schaltkupplung 48 wird geschlossen, um mittels der elektrischen Maschine 40 das Fahrzeug zum Zwecke des Rangierens bzw. Anfahrens anzutreiben oder an einem Hang anzuhalten ("Hill-Holder").

Abgesehen davon kann die elektrische Maschine 40 auch zur Schwingungsdämpfung des Antriebsstranges eingesetzt werden.

Die vorstehende Beschreibung der Funktionen der ersten Ausführungsform des erfindungsgemäßen Antriebsstranges 10 sind auch auf die nachfolgend beschriebenen Ausführungsformen des erfindungsgemäßen Antriebsstranges anwendbar. Soweit nicht ausdrücklich anders erwähnt, soll sich die Beschreibung des Antriebsstranges 10 insoweit auch auf die nachfolgend beschriebenen Antriebsstränge beziehen. Demzufolge sind in der nachfolgenden Beschreibung gleiche Elemente auch mit gleichen Bezugsziffern versehen wie bei dem Antriebsstrang 10. Es wird jeweils lediglich auf die Unterschiede zu dem Antriebsstrang 10 eingegangen.

Die nachfolgend beschriebenen Ausführungsformen des erfindungsgemäßen Antriebsstranges zeigen vorteilhafte Lösungen auf, wie das Grundkonzept des Antriebsstranges 10 konstruktiv besonders günstig realisiert werden kann, insbesondere in Bezug auf die Art der Anbindung der Kurbelwelle 18 und die Anordnung der elektrischen Maschine 40 bzw. von deren Abtriebswelle 42 in Relation zum Gehäuse des Stufengetriebes.

In Fig. 2 ist eine zweite Ausführungsform des erfindungsgemäßen Antriebsstranges generell mit 54 bezeichnet.

Das Gehäuse des Stufengetriebes 16 ist in Fig. 2 bei 56 gezeigt. Es ist zu erkennen, daß die elektrische Maschine 40 außen an dem Gehäuse 56 angeflanscht ist, wobei die Abtriebswelle 42 über eine Wellendichtung 55 in das Innere des Gehäuses 56 geführt ist.

Eine in Verlängerung der Abtriebswelle 42 vorgesehene Nebenwelle 58 erstreckt sich aus dem Inneren des Gehäuses 56 über eine Wellendichtung 57 aus dem anderen Ende des Gehäuses 56 heraus. Die Nebenwelle 58 verläuft dabei parallel zu Getriebeeingangswelle 20 und führt an der Reibkupplung 14 vorbei.

Das Stufengetriebe 16 ist in der dargestellten Ausführungsform als Quergetriebe ausgebildet, wobei die Vorgelegewelle 24 gleichzeitig die Abtriebswelle 22 des Stufengetriebes 16 bildet.

Der aus dem Gehäuse 56 herausragende Teil der Nebenwelle 58 ist in der dargestellten Ausführungsform über einen Riemenantrieb 62 drehfest mit der Kurbelwelle 18 des Verbrennungsmotors 12 verbunden.

Die Abtriebswelle 42 der elektrischen Maschine 40 ist über einen mittels der Schaltkupplung 48 schaltbaren Radsatz 59 mit der Abtriebswelle 22 des Stufengetriebes 16 verbunden.

Der Radsatz 59 weist ein nicht näher bezeichnetes Rad auf, das drehbar an der Abtriebswelle 42 der elektrischen Maschine 40 gelagert ist, ein drehbar an der Getriebeeingangswelle 20 gelagertes Rad sowie ein drehfest mit der Abtriebswelle 22 festgelegtes Rad.

Ferner ist zur Drehrichtungsumkehr ein Zwischenrad 64 vorgesehen.

Die Abtriebswelle 42 der elektrischen Maschine 40 ist ferner mittels einer Schaltkupplung 60 mit der Nebenwelle 58 verbindbar.

Die Schaltkupplungen 48 und 60 sind als ein Schaltpaket ausgeführt, wobei die Abtriebswelle 42 in einer Mittelstellung einer nicht näher bezeichneten Schaltmuffe leerläuft und weder mit der Nebenwelle 58 noch mit der Getriebeabtriebswelle 22 verbunden ist.

In Fig. 2 ist ferner die Reibkupplung 14 in größerer Genauigkeit dargestellt. Die Reibkupplung 14 weist ein Schwungrad 66 auf, das drehfest mit der Kurbelwelle 18 verbunden ist. Eine Kupplungsscheibe 68 ist drehfest mit der Getriebeeingangswelle 20 verbunden. In bekannter Weise wird die Kupplungsscheibe 68 mittels einer Tellerfeder oder ähnlichem an das Schwungrad 66 angedrückt, wobei die Tellerfeder an einem Kupplungskorb 67 gelagert ist.

Der erfindungsgemäße Antriebsstrang 10 ist vorzugsweise als automatisierter Antriebsstrang ausgebildet, wobei die Betätigungen der verschiedenen Kupplungen 14, 43, 48, 32, 60 mittels geeigneter Aktuatoren, gesteuert durch eine nicht näher bezeichnete Steuereinrichtung erfolgt.

Durch die Anordnung der Schaltkupplungen 48, 60 im Inneren des Getriebegehäuses 56 können diese Schaltkupplungen in ähnlicher Weise aufgebaut werden, wie die Schaltkupplungen 32 zum Ein- und Auslegen der Gangstufen des Stufengetriebes 16. Durch das Anordnen der elektrischen Maschine 40 außerhalb des Getriebegehäuses 56 kann eine herkömmliche elektrische Maschine verwendet werden, ohne besondere Verkapselung.

Eine Modifikation des Antriebsstranges 54 der Fig. 2 ist in Fig. 3 generell mit 70 bezeichnet.

Der Radsatz 59' weist bei dieser Modifikation kein Zwischenrad 64 zur Drehrichtungsumkehr auf.

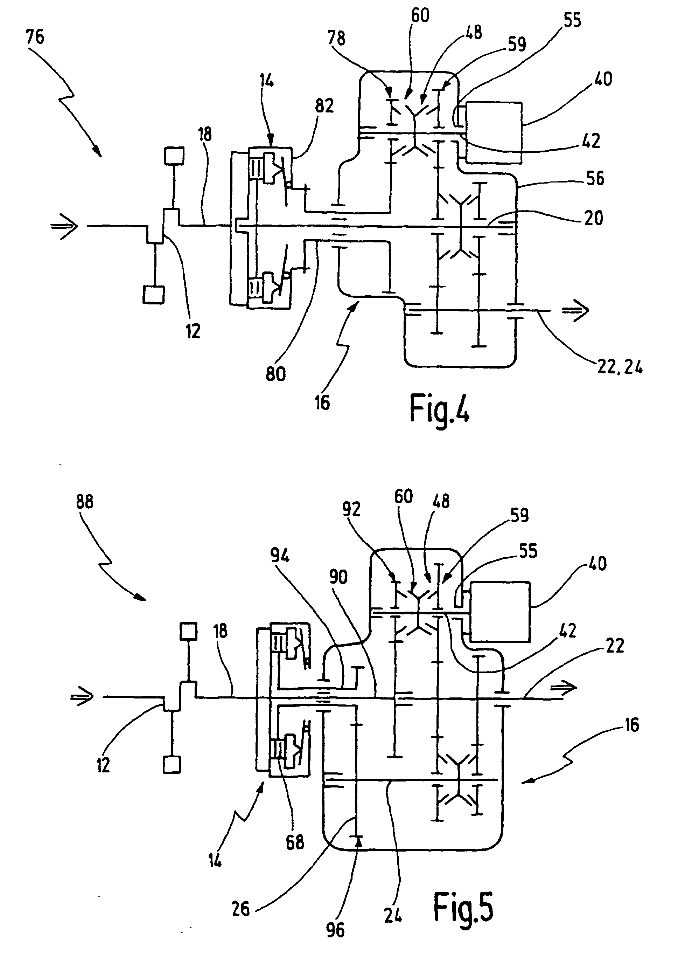

Fig. 4 zeigt eine dritte Ausführungsform eines erfindungsgemäßen Antriebsstranges 76.

Bei dem Antriebsstrang 76 ist die ins Innere des Getriebegehäuses 56 reichende Abtriebswelle 42 der elektrischen Maschine 40 über einen Radsatz 78 mit einer Nebenwelle 80 in Form einer Hohlwelle verbindbar. Die Hohlwelle 80 ist bei dieser Ausführungsform drehfest mit dem Kupplungskorb 82 verbunden, und folglich drehfest mit der Kurbelwelle 18.

Die Getriebeeingangswelle 20 erstreckt sich durch die Hohlwelle 80 hindurch.

Diese Ausführungsform hat gegenüber dem Antriebsstrang 54 den Vorteil, daß die Verbindung zwischen Abtriebswelle 42 der elektrischen Maschine 40 und Kurbelwelle 18 über ein Drehglied (in Form der Hohlwelle 80) erfolgt, das konzentrisch zu der Getriebeeingangswelle 20 angeordnet ist. Demzufolge kann der Bauraum in radialer Richtung klein gehalten werden. Es ist keine außen an der Reibkupplung 14 vorbeiführende Welle notwendig.

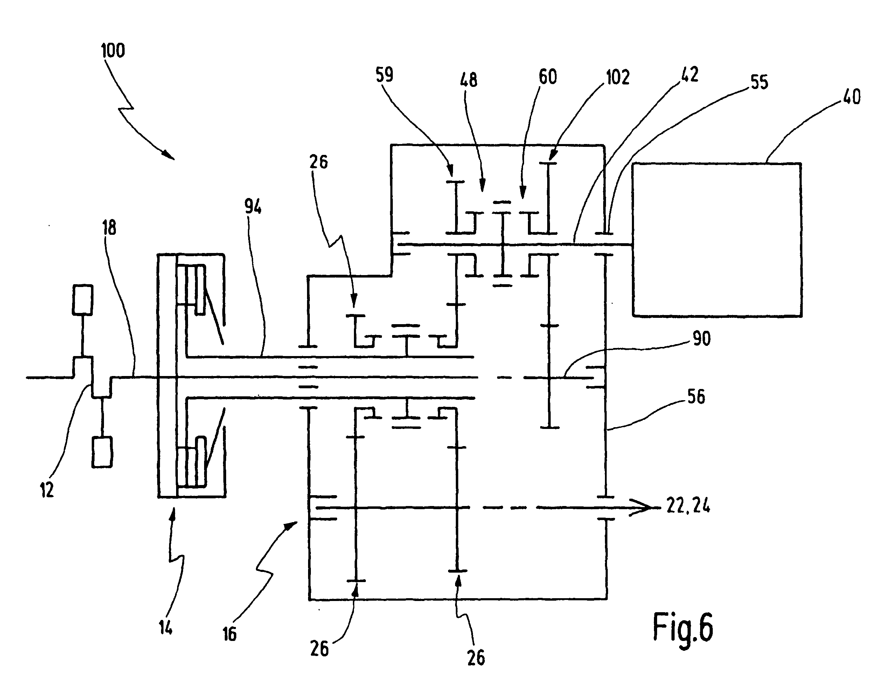

Fig. 5 zeigt eine weitere alternative Ausführungsform eines erfindungsgemäßen Antriebsstranges 88.

Bei dieser Ausführungsform ist die Abtriebswelle 42 der elektrischen Maschine 40 über einen Radsatz 92 mit einer Nebenwelle 90 verbunden, die in Verlängerung der Kurbelwelle 18 drehfest mit dieser verbunden ist. Bei dieser Ausführungsform ist die Getriebeeingangswelle 94 als Hohlwelle ausgebildet und umgibt die Nebenwelle 90.

Die Getriebeeingangswelle 94 ist über einen Konstantenradsatz 96 mit der Vorgelegewelle 24 des Stufengetriebes verbunden. Das Stufengetriebe 16 dieser Ausführungsform ist in Längsbauweise ausgeführt.

Bei dieser Ausführungsform ist ebenfalls von Vorteil, daß die Abtriebswelle 42 der elektrischen Maschine 40 über ein Drehglied (Hohlwelle 94) mit der Kurbelwelle 18 verbindbar ist, das konzentrisch zu der Getriebeeingangswelle 94 angeordnet ist. Insofern ist auch bei dieser Ausführungsform keine die Reibkupplung 14 umgehende Welle notwendig.

Fig. 6 zeigt eine fünfte Ausführungsform des erfindungsgemäßen Antriebsstranges 100.

Bei dieser Ausführungsform erstreckt sich die mit der Kurbelwelle 18 drehfest verbundene Nebenwelle 90 über die gesamte axiale Länge des Stufengetriebes 16 und ist über einen Radsatz 102 mit der Abtriebswelle 42 der elektrischen Maschine 40 verbindbar, der am abtriebsseitigen Ende des Gehäuses 56 angeordnet ist. Die Radsätze 26 des Stufengetriebes 16 sind an der als Hohlwelle ausgebildeten Getriebeeingangswelle 94 angeordnet.

Bei dem Antriebsstrang 88 der Fig. 5 befindet sich der Verbindungsradsatz 92 hingegen am getriebeeingangsseitigen Ende und die Radsätze 26 sind an der Getriebeabtriebswelle 22 bzw. der Vorgelegewelle 24 gelagert.

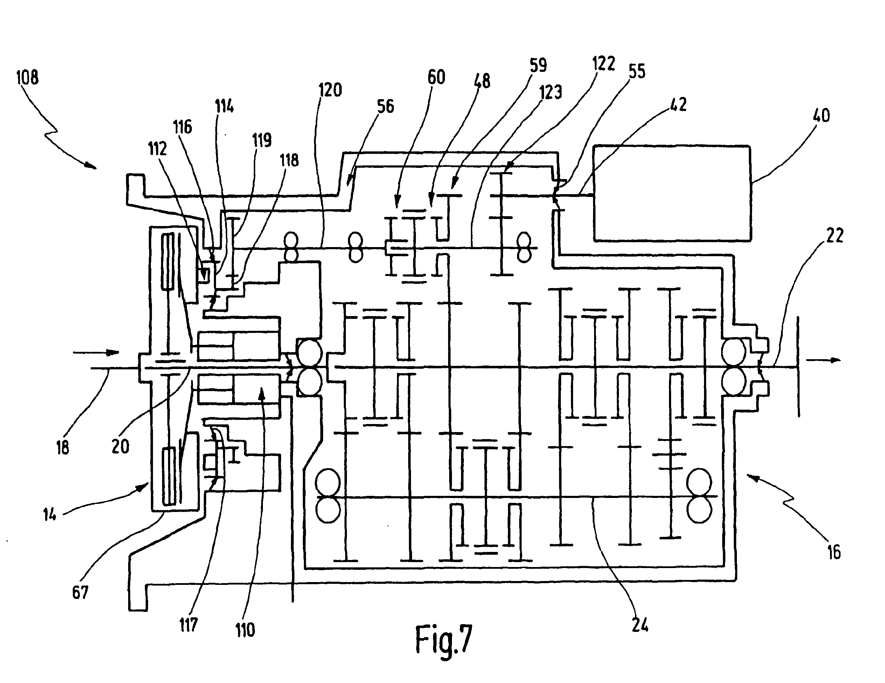

Fig. 7 zeigt eine sechste Ausführungsform des erfindungsgemäßen Antriebsstranges 108.

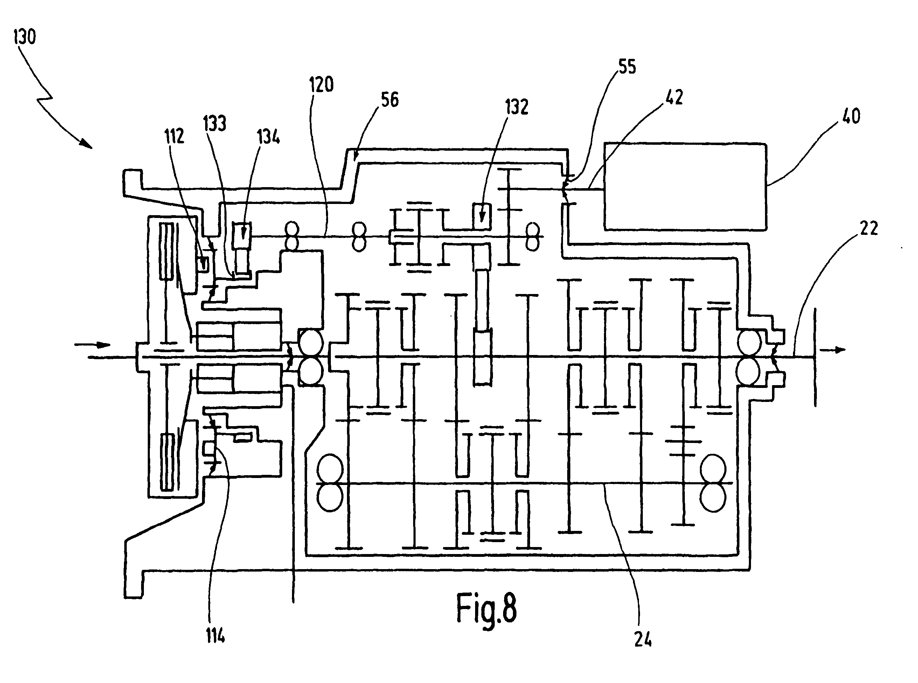

Bei der Darstellung des Antriebsstranges der Fig. 8 ist zu erkennen, daß zwischen der Reibkupplung 14 und dem Gehäuse 56 des Stufengetriebes 16 ein Kupplungsaktuator 110 angeordnet ist, und zwar konzentrisch zu der Getriebeeingangswelle 20.

Zur Verbindung der Kurbelwelle 18 mit der Abtriebswelle 42 der elektrischen Maschine 40 sind an der dem Stufengetriebe 16 zugewandten Seite des Kupplungskorbes 67 ein oder mehrere Mitnehmer 112 angeordnet.

Die Mitnehmer 112 stehen in Eingriff mit einem Ringrad 114, das konzentrisch um den Kupplungsaktuator 110 herum angeordnet ist und an dem Gehäuse 56 des Stufengetriebes 16 drehbar gelagert ist.

Das Ringrad 114 ist dabei über zwei Wellendichtungen 116 und 117 zum Getriebegehäuse 56 gedichtet und trennt somit den Innenraum des Gehäuses 56 von der Kupplungsseite.

An dem Ringrad 114 ist ein Zahnrad 118 festgelegt, das mit einem Zahnrad 119 kämmt. Das Zahnrad 119 ist drehfest mit einer Nebenwelle 120 verbunden, die parallel zu der Getriebeeingangswelle 20 angeordnet ist. Demzufolge ist die Nebenwelle 120 drehfest mit der Kurbelwelle 18 verbunden.

Die Abtriebswelle 42 der elektrischen Maschine 40 ist über einen Radsatz 122 mit einer zweiten Nebenwelle 123 verbunden, die in Verlängerung der ersten Nebenwelle 120 angeordnet ist. An der zweiten Nebenwelle 123 ist das Schaltpaket aus Schaltkupplung 48 und Schaltkupplung 60 gelagert. Die Schaltkupplung 60 verbindet die Nebenwellen 120, 123. Die Schaltkupplung 48 verbindet die Nebenwelle 123 mit einem Radsatz 59.

Bei dieser Ausführungsform ist von Vorteil, daß die Verbindung zwischen Abtriebswelle 42 der elektrischen Maschine 40 und Kurbelwelle 18 zwar über ein Drehglied (Ringrad 114) erfolgt, das konzentrisch zu der Getriebeeingangswelle 20 angeordnet ist. Gleichzeitig ist jedoch im Bereich der Reibkupplung 14 keine Hohlwellenkonstruktion notwendig, so daß die Reibkupplung 14 weitgehend herkömmlicher Bauart sein kann. An dem Kupplungskorb 67 sind lediglich die Mitnehmer 112 vorzusehen, die den Kupplungskorb 67 drehfest mit dem Ringrad 114 verbinden.

Ferner ist innerhalb des Ringrades 114 hinreichend Bauraum zur Aufnahme des Kupplungsaktuators 110 vorhanden.

Durch das Bereitstellen der zweiten Nebenwelle 123 und des Radsatzes 122 ist es möglich, die Anordnung der elektrischen Maschine 40 an dem Getriebegehäuse 56 variabler zu wählen. Alternativ hierzu ist es jedoch auch möglich, daß die Schaltkupplungen 48, 60 unmittelbar an der Abtriebswelle 42 der elektrischen Maschine 40 gelagert sind.

Fig. 8 zeigt eine siebte Ausführungsform des erfindungsgemäßen Antriebsstranges 130, die weitgehend identisch ist mit dem Antriebsstrang 108 der Fig. 7.

Bei dem Antriebsstrang 130 ist das Ringrad 114 mit einer Riemenscheibe 133 versehen und über einen Riemenantrieb 134 mit der Nebenwelle 120 verbunden. Anstelle des Radsatzes 59 ist ebenfalls ein Riemenabtrieb vorgesehen, der in Fig. 8 generell mit 132 bezeichnet ist.

## Patentansprüche

1. Antriebsstrang (10;54;70;76;88;100;108;130) für ein Kraftfahrzeug, das von einem Verbrennungsmotor (12) angetrieben ist, mit:
- einer einzelnen Reibkupplung (14), die ein Eingangsglied und ein Ausgangsglied aufweist, wobei das Eingangsglied mit einer Kurbelwelle (18) des Verbrennungsmotors (12) zu verbinden ist;
- einem Stufengetriebe (16), das eine Eingangswelle (20;94), eine Mehrzahl von Radsätzen (26) entsprechend einer Mehrzahl von Gangstufen und eine Abtriebswelle (22) aufweist, wobei die Eingangswelle (20;94) mit dem Ausgangsglied der Reibkupplung (14) verbunden ist; und
- einer elektrischen Maschine (40), die über eine Kupplung (48) mit der Abtriebswelle (22) des Stufengetriebes (16) verbindbar ist, um bei geöffneter oder geschlossener Reibkupplung (14) Zugkraft auf die Abtriebswelle (22) des Stufengetriebes (16) leiten zu können, und die als Startergenerator mit der Kurbelwelle (18) verbindbar ist, um den Verbrennungsmotor (12) zu starten oder von dem Verbrennungsmotor (12) angetrieben zu werden;
**dadurch gekennzeichnet, daß**
die elektrische Maschine (40) unter Umgehung der Reibkupplung (14) drehfest mit der Kurbelwelle (18) verbindbar ist, um somit bei geöffneter Reibkupplung (14) den Verbrennungsmotor (12) zu starten oder von dem Verbrennungsmotor (12) angetrieben zu werden.

2. Antriebsstrang nach Anspruch 1, **dadurch gekennzeichnet, daß** die elektrische Maschine (40) außerhalb eines Gehäuses (56) des Stufengetriebes (16) angeordnet ist und eine Abtriebswelle (42) aufweist, die sich über eine Wellendichtung (55) in das Innere des Gehäuses (56) hinein erstreckt.

3. Antriebsstrang nach Anspruch 2, **dadurch gekennzeichnet, daß** die Abtriebswelle (42) der elektrischen Maschine (40) parallel zu der Abtriebswelle (22) des Stufengetriebes (16) angeordnet ist.

4. Antriebsstrang nach Anspruch 3, **dadurch gekennzeichnet, daß** die Abtriebswelle (42) der elektrischen Maschine (40) über einen Radsatz (59) und eine Schaltkupplung (48) mit der Abtriebswelle (22) des Stufengetriebes (16) verbindbar ist.

5. Antriebsstrang nach Anspruch 4, **dadurch gekennzeichnet, daß** die Schaltkupplung (48) eine synchronisierte Schaltkupplung ist.

6. Antriebsstrang nach einem der Ansprüche 1 - 5, **dadurch gekennzeichnet, daß** die Abtriebswelle (42) der elektrischen Maschine (40) parallel zu der Kurbelwelle (18) des Verbrennungsmotors (12) angeordnet ist.

7. Antriebsstrang nach einem der Ansprüche 1 - 6, **dadurch gekennzeichnet, daß** die Abtriebswelle (42) der elektrischen Maschine (40) über eine Schaltkupplung (60) mit der Kurbelwelle (18) verbindbar ist und daß die Schaltkupplung (60) innerhalb des Gehäuses (56) des Stufengetriebes (16) angeordnet ist.

8. Antriebsstrang nach einem der Ansprüche 1 - 7, **dadurch gekennzeichnet, daß** die Verbindung zwischen der Abtriebswelle (42) der elektrischen Maschine (40) und der Kurbelwelle (18) über eine Welle (42;58) erfolgt, die parallel zu der Eingangswelle (20;80;94) des Stufengetriebes (16) angeordnet ist.

9. Antriebsstrang nach einem der Ansprüche 1 - 7, **dadurch gekennzeichnet, daß** die Verbindung zwischen der Abtriebswelle (42) der elektrischen Maschine (40) und der Kurbelwelle (18) über ein Drehglied (80;90;114) erfolgt, das konzentrisch zu der Eingangswelle (20;94) des Stufengetriebes (16) angeordnet ist.

10. Antriebsstrang nach Anspruch 9, **dadurch gekennzeichnet, daß** das Drehglied (80) als Hohlwelle (80) ausgebildet ist, die mit dem Eingangsglied der Reibkupplung (14) verbunden ist und um die Eingangswelle (20) des Stufengetriebes (16) herum angeordnet ist.

11. Antriebsstrang nach Anspruch 9, **dadurch gekennzeichnet, daß** die Eingangswelle (94) des Stufengetriebes (16) als Hohlwelle ausgebildet ist und daß das Drehglied (90) als Welle (90) innerhalb der Eingangswelle (94) gelagert ist.

12. Antriebsstrang nach Anspruch 9, **dadurch gekennzeichnet, daß** das Drehglied (114) als Ringrad (114) ausgebildet ist, das mittels Wellendichtungen (116, 117) gegenüber dem Gehäuse (56) des Stufengetriebes (16) abgedichtet und über wenigstens einen mit dem Eingangsglied der Reibkupplung (14) verbundenen Mitnehmer (112) drehfest mit der Kurbelwelle (18) verbunden ist.

13. Antriebsstrang nach Anspruch 12 **dadurch gekennzeichnet, daß** die Verbindung zwischen der Abtriebswelle (42) der elektrischen Maschine (40) und dem Ringrad (114) über wenigstens ein Zugmittelgetriebe (132, 134) erfolgt.

14. Antriebsstrang nach einem der Ansprüche 1 - 13, **dadurch gekennzeichnet, daß** die Abtriebswelle (42) der elektrischen Maschine (40) mittels eines Schaltkupplungspakets (48,60) alternativ mit der Kurbelwelle (18) oder der Abtriebswelle (22) des Stufengetriebes (16) verbindbar ist.

15. Antriebsstrang nach Anspruch 14, **dadurch gekennzeichnet, daß** das Schaltkupplungspaket (48,60) zusätzlich in den Leerlauf schaltbar ist, so daß die Abtriebswelle (42) der elektrischen Maschine (40) leerläuft.

16. Verfahren zum Starten eines Verbrennungsmotors (12) eines Kraftfahrzeuges und zum Einleiten des Anfahrens des Kraftfahrzeuges, wobei die Kurbelwelle (18) des Verbrennungsmotors (12) mit einem Eingangsglied einer einzelnen Reibkupplung (14) eines Antriebsstranges (10;54;70;76; 88;100;108;130) verbunden ist, deren Ausgangsglied mit einer Eingangswelle (20;94) eines Stufengetriebes (16) verbunden ist, und wobei der Antriebsstrang (10;54;70;76;88;100;108;130) eine elektrische Maschine (40) aufweist, die sowohl mit der Abtriebswelle (22) des Stufengetriebes als auch unmittelbar mit der Kurbelwelle (18) verbindbar ist, mit den auf ein Startaufforderungssignal hin erfolgenden Schritten:
a) Verbinden der elektrischen Maschine (40) mit der Kurbelwelle (18), unter Umgehung der Reibkupplung (14);
b) Öffnen der Reibkupplung (14), falls diese noch nicht geöffnet ist;
c) Einlegen einer zum Anfahren geeigneten Gangstufe des Stufengetriebes (16), falls diese noch nicht eingelegt ist;
d) Anlauf der elektrischen Maschine (40), so daß der Verbrennungsmotor (12) gestartet werden kann;
e) Starten des Verbrennungsmotors (12); und
f) Schließen der Reibkupplung zum Anfahren des Kraftfahrzeuges.

17. Verfahren zum Generieren von elektrischem Strom durch eine elektrische Maschine (40), die von einem Verbrennungsmotor (12) eines Kraftfahrzeuges angetrieben wird, während das Kraftfahrzeug stillsteht, wobei die Kurbelwelle (18) des Verbrennungsmotors (12) mit einem Eingangsglied einer einzelnen Reibkupplung (14) eines Antriebsstranges (10;54; 70;76;88;100;108;130) verbunden ist, deren Ausgangsglied mit einer Eingangswelle (20;94) eines Stufengetriebes (16) verbunden ist, und wobei der Antriebsstrang (10;54;70;76;88;100;108;130) eine elektrische Maschine (40) aufweist, die sowohl mit der Abtriebswelle (22) des Stufengetriebes als auch unmittelbar mit der Kurbelwelle (18) verbindbar ist, mit den Schritten:
i) Öffnen der Reibkupplung (14), falls diese noch nicht geöffnet ist;
ii) Einlegen einer zum Anfahren geeigneten Gangstufe des Stufengetriebes (16), falls diese noch nicht eingelegt ist;
iii) Verbinden der elektrischen Maschine (40) mit der Kurbelwelle (18), unter Umgehung der Reibkupplung (14), so daß die elektrische Maschine (40) als Generator arbeitet.

## Revendications

1. Chaîne cinématique (10 ; 54 ; 70 ; 76 ; 88 ; 100 ; 108 ; 130) pour un véhicule automobile qui est entraîné par un moteur à combustion interne (12), comportant :
- un embrayage à friction (14) isolé qui comporte un élément d'entrée et un élément de sortie, l'élément d'entrée devant être relié à un vilebrequin (18) du moteur à combustion interne (12) ;
- une transmission à engrenages (16) qui comporte un arbre d'entrée (20 ; 94), une pluralité de jeux de roues (26) correspondant à une pluralité de rapports de marche ainsi qu'un arbre de sortie (22), l'arbre d'entrée (20 ; 94) étant relié à l'élément de sortie de l'embrayage à friction (14) ; et
- une machine électrique (40), qui peut être reliée par un accouplement (48) à l'arbre de sortie (22) de la transmission à engrenages (16), afin de pouvoir guider la force de traction vers l'arbre de sortie (22) de la transmission à engrenages (16), lorsque l'embrayage à friction (14) est ouvert ou fermé, et qui peut être reliée, en tant que générateur de démarreur, au vilebrequin (18) afin de faire démarrer le moteur à combustion interne (12) ou d'être entraînée par le moteur à combustion interne (12) ;
**caractérisée en ce que**
la machine électrique (40) peut être reliée solidairement en rotation au vilebrequin (18), en contournant l'embrayage à friction (14), afin de faire ainsi démarrer le moteur à combustion interne (12) ou d'être entraînée par le moteur à combustion interne (12), lorsque l'embrayage à friction (14) est ouvert.

2. Chaîne cinématique selon la revendication 1, **caractérisée en ce que** la machine électrique (40) est disposée à l'extérieur d'un carter (56) de la transmission à engrenages (16) et comporte un arbre de sortie (42) qui s'étend, par une étanchéité d'arbre (55), à l'intérieur du carter (56).

3. Chaîne cinématique selon la revendication 2, **caractérisée en ce que** l'arbre de sortie (42) de la machine électrique (40) est disposé parallèlement à l'arbre de sortie (22) de la transmission à engrenages (16).

4. Chaîne cinématique selon la revendication 3, **caractérisée en ce que** l'arbre de sortie (42) de la machine électrique (40) peut être relié, par un jeu de roues (59) et un embrayage (48), à l'arbre de sortie (22) de la transmission à engrenages (16).

5. Chaîne cinématique selon la revendication 4, **caractérisée en ce que** l'embrayage (48) est un embrayage synchronisé.

6. Chaîne cinématique selon l'une des revendications 1 à 5, **caractérisée en ce que** l'arbre de sortie (42) de la machine électrique (40) est disposé parallèlement au vilebrequin (18) du moteur à combustion interne (12).

7. Chaîne cinématique selon l'une des revendications 1 à 6, **caractérisée en ce que** l'arbre de sortie (42) de la machine électrique (40) peut être relié, par un embrayage (60), au vilebrequin (18), et **en ce que** l'embrayage (60) est disposé à l'intérieur du carter (56) de la transmission à engrenages (16).

8. Chaîne cinématique selon l'une des revendications 1 à 7, **caractérisée en ce que** la liaison entre l'arbre de sortie (42) de la machine électrique (40) et le vilebrequin (18) s'effectue par l'intermédiaire d'un arbre (42 ; 58) qui est disposé parallèlement à l'arbre d'entrée (20 ; 80 ; 94) de la transmission à engrenages (16).

9. Chaîne cinématique selon l'une des revendications 1 à 7, **caractérisée en ce que** la liaison entre l'arbre de sortie (42) de la machine électrique (40) et le vilebrequin (18) s'effectue par un élément tournant (80 ; 90 ; 114) qui est disposé concentriquement à l'arbre d'entrée (20 ; 94) de la transmission à engrenages (16).

10. Chaîne cinématique selon la revendication 9, **caractérisée en ce que** l'élément toumant (80) est réalisé sous la forme d'un arbre creux (80) qui est relié à l'élément d'entrée de l'embrayage à friction (14) et est disposé autour de l'arbre d'entrée (20) de la transmission à engrenages (16).

11. Chaîne cinématique selon la revendication 9, **caractérisée en ce que** l'arbre d'entrée (94) de la transmission à engrenages (16) est réalisé sous la forme d'un arbre creux et **en ce que** l'élément toumant (90) est monté, en tant qu'arbre (90), à l'intérieur de l'arbre d'entrée (94).

12. Chaîne cinématique selon la revendication 9, **caractérisé en ce que** l'élément tournant (114) est réalisé sous la forme d'une roue annulaire (114) qui est rendue étanche par rapport au carter (56) de la transmission à engrenages (16), au moyen d'étanchéité pour arbre, et est reliée solidairement en rotation au vilebrequin (18), par au moins un entraîneur (112) relié à l'élément d'entrée de l'embrayage à friction (14).

13. Chaîne cinématique selon la revendication 12, **caractérisé en ce que** la liaison entre l'arbre de sortie (42) de la machine électrique (40) et la roue annulaire (114) s'effectue par au moins une transmission à moyen de traction (132, 134).

14. Chaîne cinématique selon l'une des revendications 1 à 13, **caractérisée en ce que** l'arbre de sortie (42) de la machine électrique (40) peut être relié au moyen d'un groupement d'embrayages (48, 60), en variante au vilebrequin (18) ou à l'arbre de sortie (22) de la transmission à engrenages (16).

15. Chaîne cinématique selon la revendication 14, **caractérisée en ce que** le groupement d'embrayages (48, 60) peut être commuté en outre en marche à vide, ce qui fait que l'arbre de sortie (42) de la machine électrique (40) tourne à vide.

16. Procédé de démarrage d'un moteur à combustion interne (12) d'un véhicule automobile et d'amorce du démarrage du véhicule automobile, dans lequel le vilebrequin (18) du moteur à combustion interne (12) est relié à un élément d'entrée d'un embrayage à friction (14) isolé d'une chaîne cinématique (10 ; 54 ; 70 ; 76 ; 88 ; 100 ; 108 ; 130) dont l'élément de sortie est relié à un arbre d'entrée (20 ; 94) d'une transmission à engrenages (16), et dans lequel la chaîne cinématique (10 ; 54 ; 70 ; 76 ; 88 ; 100 ; 108 ; 130) comporte une machine électrique (40) qui peut être reliée à l'arbre de sortie (22) de la transmission à engrenages de même que directement au vilebrequin (18), avec les étapes suivantes se produisant à la suite d'un signal de demande de démarrage :
a) liaison de la machine électrique (40) au vilebrequin (18) en contournant l'embrayage à friction (14) ;
b) ouverture de l'embrayage à friction (14) dans le cas où celui-ci n'est pas encore ouvert ;
c) engagement d'un rapport de la transmission à engrenages (16), qui convient au démarrage, dans le cas où celui-ci n'est pas encore engagé ;
d) démarrage de la machine électrique (40), ce qui fait que le moteur à combustion interne (12) peut démarrer ;
e) démarrage du moteur à combustion interne (12) ; et
f) fermeture de l'embrayage à friction pour le démarrage du véhicule auto mobile.

17. Procédé pour générer un courant électrique au moyen d'une machine électrique (40) qui est entraînée par un moteur à combustion interne (12) d'un véhicule automobile, tandis que le véhicule automobile est à l'arrêt, le vilebrequin (18) du moteur à combustion interne (12) étant relié à un élément d'entrée d'un embrayage à friction (14) isolé d'une chaîne cinématique (10 ; 54 ; 70 ; 76 ; 88 ; 100 ; 108 ; 130) dont l'élément de sortie est relié à un arbre d'entrée (20 ; 94) d'une transmission à engrenages (16), et la chaîne cinématique (10 ; 54 ; 70 ; 76 ; 88 ; 100 ; 108 ; 130) comportant une machine électrique (40) qui peut être reliée à l'arbre de sortie (22) de la transmission à engrenages de même que directiement au vilebrequin (18), avec les étapes suivantes :
i) ouverture de l'embrayage à friction (14) dans le cas où celui-ci n'est pas encore ouvert ;
ii) engagement d'un rapport de la transmission à engrenages (16), convenant au démarrage, dans le cas où celui-ci n'est pas encore engagé ;
iii) liaison de la machine électrique (40) au vilebrequin (18), en contournant l'embrayage à friction (40), ce qui fait que la machine électrique (40) fonctionne en tant que générateur.

## Claims

1. A drive train (10; 54; 70; 76; 88; 100; 108; 130) for a motor vehicle which is driven by an internal combustion engine (12), having:
- a single friction clutch (14) which has an input element and an output element, wherein the input element is to be connected to a crankshaft (18) of the internal combustion engine (12);
- a step-by-step variable speed transmission (16) which has an input shaft (20; 94), a multiplicity of wheel sets (26) corresponding to a multiplicity of gear speeds, and an output shaft (22), wherein the input shaft (20; 94) is connected to the output element of the friction clutch (14); and
- an electric machine (40) which can be connected via a clutch (48) to the output shaft (22) of the step-by-step variable speed transmission (16) in order to be able to apply traction force to the output shaft (22) of the step-by-step variable speed transmission (16) when the friction clutch (14) is opened or closed, and which can be connected as a starter generator to the crankshaft (18) in order to start the internal combustion engine (12) or be driven by the internal combustion engine (12);
**characterized in that**
the electric machine (40) can be connected fixed in terms of rotation to the crankshaft (18) while bypassing the friction clutch (14) in order, in this way, to start the internal combustion engine (12) or be driven by the internal combustion engine (12) when the friction clutch (14) is opened.

2. The drive train as claimed in claim 1, **characterized in that** the electric machine (40) is arranged outside a housing (56) of the step-by-step variable speed transmission (16) and has an output shaft (42) which extends into the interior of the housing (56) via a shaft seal (55).

3. The drive train as claimed in claim 2, **characterized in that** the output shaft (42) of the electric machine (40) is arranged parallel to the output shaft (22) of the step-by-step variable speed transmission (16).

4. The drive train as claimed in claim 3, **characterized in that** the output shaft (42) of the electric machine (40) can be connected to the output shaft (22) of the step-by-step variable speed transmission (16) via a wheel set (59) and a shift clutch (48).

5. The drive train as claimed in claim 4, **characterized in that** the shift clutch (48) is a synchronized clutch.

6. The drive train as claimed in one of claims 1 to 5, **characterized in that** the output shaft (42) of the electric machine (40) is arranged parallel to the crankshaft (18) of the internal combustion engine (12).

7. The drive train as claimed in one of claims 1 to 6, **characterized in that** the output shaft (42) of the electric machine (40) can be connected to the crankshaft (18) via a shift clutch (60), and **in that** the shift clutch (60) is arranged inside the housing (56) of the step-by-step variable speed transmission (16).

8. The drive train as claimed in one of claims 1 to 7, **characterized in that** the connection between the output shaft (42) of the electric machine (40) and the crankshaft (18) is made via a shaft (42; 58) which is arranged parallel to the input shaft (20; 80; 94) of the step-by-step variable speed transmission (16).

9. The drive train as claimed in one of claims 1 to 7, **characterized in that** the connection between the output shaft (42) of the electric machine (40) and the crankshaft (18) is made via a rotational element (80; 90; 114) which is arranged concentrically with respect to the input shaft (20; 94) of the step-by-step variable speed transmission (16).

10. The drive train as claimed in claim 9, **characterized in that** the rotational element (80) is embodied as a hollow shaft (80) which is connected to the input shaft of the friction clutch (14) and is arranged around the input shaft (20) of the step-by-step variable speed transmission (16).

11. The drive train as claimed in claim 9, **characterized in that** the input shaft (94) of the step-by-step variable speed transmission (16) is embodied as a hollow shaft, and **in that** the rotational element (90) is mounted as a shaft (90) inside the input shaft (94).

12. The drive train as claimed in claim 9, **characterized in that** the rotational element (114) is embodied as a ring gear (114) which is sealed with respect to the housing (56) of the step-by-step variable speed transmission (16) by means of shaft seals (116, 117), and is connected fixed in terms of rotation to the crankshaft (18) by means of at least one driver (112) which is connected to the input element of the friction clutch (14).

13. The drive train as claimed in claim 12, **characterized in that** the connection between the output shaft (42) of the electric machine (40) and the ring gear (114) is made via at least one flexible drive mechanism (132, 134).

14. The drive train as claimed in one of claims 1 to 13, **characterized in that** the output shaft (42) of the electric machine (40) can be alternatively connected to the crankshaft (18) or the output shaft (22) of the step-by-step variable speed transmission (16) by means of a clutch package (48, 60).

15. The drive train as claimed in claim 14, **characterized in that** the clutch package (48, 60) can additionally be switched into the idling state so that the output shaft (42) of the electric machine (40) idles.

16. A method for starting an internal combustion engine (12) of a motor vehicle and for initiating the driving off of the motor vehicle, wherein the crankshaft (18) of the internal combustion engine (12) is connected to an input element of a single friction clutch (14) of a drive train (10; 54; 70; 76; 88; 100; 108; 130), the output element of the friction clutch (14) being connected to an input shaft (20; 94) of a step-by-step variable speed transmission (16), and wherein the drive train (10; 54; 70; 76; 88; 100; 108; 130) has an electric machine (40) which can be connected both to the output shaft (22) of the step-by-step variable speed transmission and also directly to the crankshaft (18), having the steps which take place in response to a start request signal:
a) connection of the electric machine (40) to the crankshaft (18) while bypassing the friction clutch (14);
b) opening of the friction clutch (14) if it is not yet opened;
c) engagement of a gear speed of the step-by-step variable speed transmission (16) which is suitable for driving off if said gear speed has not yet been engaged;
d) starting up of the electric machine (40) so that the internal combustion engine (12) can be started;
e) starting of the internal combustion engine (12); and
f) closing of the friction clutch in order to drive off the motor vehicle.

17. A method for generating electric current by means of an electric machine (40) which is driven by an internal combustion engine (12) of a motor vehicle, while the motor vehicle is stationary, wherein the crankshaft (18) of the internal combustion engine (12) is connected to an input element of a single friction clutch (14) of a drive train (10; 54; 70; 76; 88; 100; 108; 130), the output element of the friction clutch (14) being connected to an input shaft (20; 94) of a step-by-step variable speed transmission (16), and wherein the drive train (10; 54; 70; 76; 88; 100; 108; 130) has an electric machine (40) which can be connected both to the output shaft (22) of the step-by-step variable speed transmission and also directly to the crankshaft (18), having the steps:
i) opening of the friction clutch (14) if it is not yet opened;
ii) engagement of a gear speed of the step-by-step variable speed transmission (16) which is suitable for driving off if said gear speed has not yet been engaged;
iii) connection of the electric machine (40) to the crankshaft (18) while bypassing the friction clutch (14) so that the electric machine (40) operates as a generator.
